**Europäisches Patentamt**

**European Patent Office**

**Office européen des brevets**

(11) Publication number: **0 154 044**
**B1**

# (12) EUROPEAN PATENT SPECIFICATION

(45) Date of publication of patent specification: **16.01.91**

(21) Application number: **84201480.5**

(22) Date of filing: **15.10.84**

(51) Int. Cl.⁵: **A 01 J 27/00**

(54) Machine for washing or greasing cylindrical shapes of cheese.

(43) Date of publication of application:
**11.09.85 Bulletin 85/37**

(45) Publication of the grant of the patent:
**16.01.91 Bulletin 91/03**

(84) Designated Contracting States:
**AT BE CH DE FR GB IT LI LU NL SE**

(56) References cited:
**DE-B-1 080 345**
**DE-B-1 143 665**
**FR-A-1 137 270**
**NL-C- 44 512**
**NL-C- 90 531**

(73) Proprietor: **Chiarappa, Matteo**
**Via De Amicis, 30**
**I-70014 Conversano (BA) (IT)**

(72) Inventor: **Chiarappa, Matteo**
**Via De Amicis, 30**
**I-70014 Conversano (BA) (IT)**

(74) Representative: **Russo, Saverio, Dott. Ing.**
**Via Ottavio Serena, 37**
**I-70126 Bari (IT)**

Courier Press, Leamington Spa, England.

## Description

The present invention refers to a machine for washing and greasing the crust of cheeses having a generally cylindrically form. Presently the treatment of cheeses crust intended for removing scales produced either by dust or by humidity and for preventing the fungus formation and the proliferation of harmful micro-organismes is carried out either with machines, whereby the shapes of cheese have to be brought manually into contact with rotating brushes which are sprayed with water or with greasing substances, or with automatic machines.

While the first type of machines does not solve the problems related to the manual labour and the expenses therefor, the second type shows a plurality of functional shortcomings which do only allow said automatic machines to be used for the treatment of the shapes of cheese with greasing substances but do not allow said automatic machines to be used for washing purposes either.

Moreover said known machines have a very low operative capability and may treat only shapes of cheese showing geometrical dimensions inside a narrow range.

From DE—B—11143665, which is an addition to DE—B—1080345, is known a machine for performing a greasing process on the crust of shapes of cheese which show an essentially cylindrical form while they are longitudinally moving through said machine presenting the following features:

—an elongated body provided with an inlet chute and a take-off chute, a conveying belt for conveying the shapes of cheese until they reach said inlet chute;

—means for the greasing process, in two longitudinally extending operative regions having the general shape of tunnels, the free height of said tunnels being adjustably delimited in relationship with the diameter of the cylindrical shapes of cheese;

—means to thrust the shapes of cheese inside the operative region in two orthogonal directions in which they form two orthogonal trains of shapes of cheese, e.g. two orthogonal pistons;

—sprinkling means.

Nevertheless the greasing process of this machine is complex since the greasing of the cylindrical shapes of cheese is made in two different steps, i.e. in the first step the circular surfaces of the base are greased and in a second step, in an orthogonal tunnel, the side surfaces are greased: therefore the operating speed of the machine is low and two different means (e.g. two orthogonal pistons) are necessary to thrust the shapes of cheese.

The machine according to claim 1 of the present invention has the purpose of remediating the mentioned shortcomings. Preferred features of the invention are set out in the dependent claims.

It is accordingly the first object of the present invention to provide a single automatic machine allowing both the washing treatment with water and the greasing treatment with greasing substances to be carried out on shapes of cheese showing widely spreaded dimensional shapes.

The second object of the present invention is to provide such a machine whereby the mechanical movement of its component elements is highly simplified and whereby the duration in time and the intensity of the washing treatment may easily be controlled as a function of the hardness shown by the crust of the shapes of cheese to be treated.

The third object of the present invention is to provide such a machine whereby an automatic interrelationship is provided between the feeding rate and the displacement of the shapes of cheese inside the operative region of said machine.

Such a machine, as defined in the claims, will now be described in detail, by describing two preferred embodiments thereof, with reference to the accompanying drawings whereby:

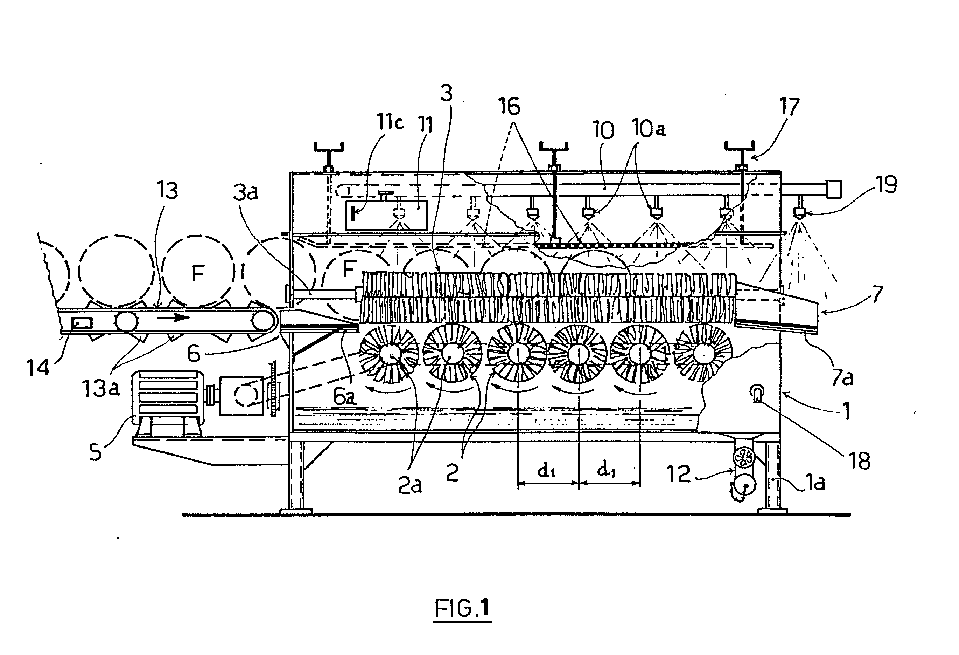

—Fig. 1 shows a longitudinal cross section of the machine with its feeding means in the form of a conveying belt,

—Fig. 2 is a top view of the machine according to Fig. 1, deprived of its covering hood,

—Fig. 3 is a front view of the hereabove embodiment from that side where the driving means are fitted up,

—Fig. 4 shows the cross section of the upper covering hood,

—Fig. 5 shows the dimensional interrelationships between the brushes and the shapes of chesse, and

—Fig. 6 shows a longitudinal cross section of the machine with its feeding means in the form of a rotating boom.

According to the Figures, the machine comprises a fluid-tight metallic tank 1 resting upon legs 1a, provided with a bottom exhaust 12 and a level drain 18 and having mounted inside two assemblage of rotatable cylindrical brushes.

The first assemblage comprises a plurality of brushes 2 solidarly mounted on transversal shafts 2a; the second assemblage comprises a plurality of brushes 3 solidarly mounted on longitudinal shafts 3a, said brushes 3 are located above said brushes 2.

Said shafts 2a carrying said transveral brushes 2 are driven into rotation through chains or belts 4 and 4a by a single motor 5 which is also responsible for driving into rotation, through analogous means, said shafts 3a carrying said longitudinal brushes 3.

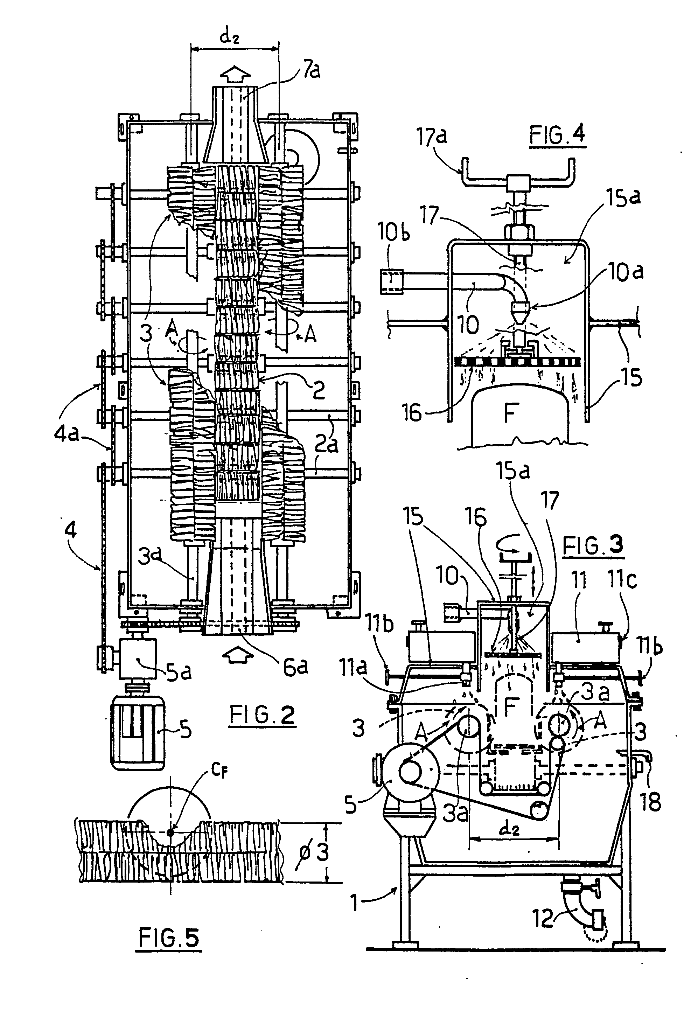

In an alternative embodiment, the two shafts 3a (Figs. 2 and 3) may be driven into rotation independently each by its own motor.

In said alternative embodiment the chains or belts 4 and 4a may be driven by one of said two motors or by a third motor. A first important feature of the machine according to the present invention is the way in which it performs the washing process on the shapes of cheese F.

The longitudinal brushes 3 sprayed by the water sprinkled by sprinklers 10a which are supplied through electrovalves by a distribution pipe 10, perform the cleaning of the circular surfaces at the top and at the bottom of each shape of cheese F, while the transversal brushes 2 perform the cleaning of the cylindrical external surface of the same shape of cheese F. For this purpose the longitudinal brushes 3 rotate, in such a way as to pull downward the washing water and the dirtiness present on said circular surfaces i.e. the brushes 3 rotate as shown by arrows A on Figs. 2 and 3, while all the transversal brushes 2 rotate in the same sense (preferably clockwise) at such a speed which provides each shape of cheese F to rotate around its own axis and which hence allows the cylindrical external surface of each shape of cheese to be uniformly washed.

Said rotational speed of said transversal brushes 2 has moreover to be such as not to provoke the longitudinal progression of the shapes of cheese F inside the machine; the shapes of cheese shall in fact be allowed to come out from the machine only after a predetermined time is elapsed.

Successively a final washing is performed by spraying water from a shower 19 onto take-off chute 7.

The greasing process of the shapes of cheese with oil or analogous greasing substances is performed with the same method and the same machine as the washing process but with the only difference that at the end no oil is sprayed onto the take-off chute 7.

The oil for the greasing process is contained in the oil-tanks 11 from which, through electrovalves, it comes out from sprinklers 11a whose opening is controlled by knobs 11b.

A second important feature of the machine according to the present invention is the way in which the cylindrical shapes of cheese F progress the operative region of the machine along over the transversal brushes 2.

A conveying belt 13 provided with transversal suitably spaced ribs 13a made e.g. of rubber, pulls the shapes of cheese F until they reach an inlet chute 6 through which they insinuate themselves onto the transversal brushes 2 and between the longitudinal brushes 3.

During the washing or the greasing process the shapes of cheese progress toward the discharge throat of the machine i.e. toward the take-off chute 7 upon the successive thrusts that the train of shapes of cheese, which are reciprocally in contact to each other inside the machine, receives from the shapes of cheese further conveyed by the conveying belt.

This allows to interrupt the washing or the greaing process, in the case of failure in the feeding of the machine, by means of suitable detecting devices 14, mounted at such a suitable position as to detect and verify the displacement of the shapes of cheese inside the machine.

Upon failure in the feeding of the machine, said detecting devices 14 inform the attending employees that they must feed continuously the machine if they do not want possible monitoring devices to come into action.

The positioning of the shafts carrying the longitudinal brushes 3 and the transversal brushes 2 is adjustable in height and the reciprocal distance between said shafts is also adjustable.

This allows the same single machine to wash or grease shapes of cheese having wide spreaded geometrical dimensions.

For the purpose it is in fact sufficient (see Fig. 5) that the centre $C_F$ of the shapes of cheese falls inside the operative region of the brushes.

In order to avoid that the shapes of cheese overlap each other inside the operative region of the machine a tunnel 15a is provided whereby an hool 15 constitutes the top-wall, the longitudinal brushes 3 constitute the side-walls and the series of transversal brushes 2 constitutes the bottom-wall of said tunnel 15a.

Inside said tunnel 15a a metal plate 16 is inserted which extends longitudinally through the whole length of the machine inside, i.e. of the operative region of the machine.

Said metal plate 16 is provided with holes suitably disposed on its whole surface and its positioning is adjustable in height by means of screw-spindles 17 actionable by knobs 17a in order to delimitate the free height of said tunnel 15a to mate with the diameter of the shapes of cheese to be processed.

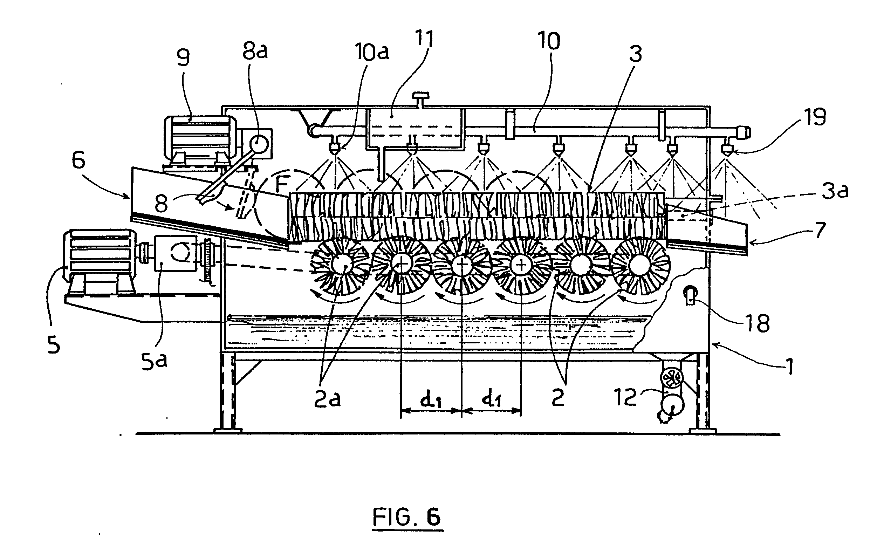

In the embodiment according to Fig. 6, the shapes of cheese F, introduced into the machine through the inlet chute 6, receive the thrusts responsible for their longitudinal movement through the operative region from a rotating boom 8 which is driven by a motor 9.

Said thrusts are transmitted along the train of shapes of cheese F present in the channel formed by the brushes, due to the fact that said shapes of cheese F are reciprocally in contact to each other, and pull them toward the take-off chute 7.

The rotating boom 8 may obviously be replaced by any other analous pulling means like e.g. a piston etc.

The water sprayed during the washing process and the greasing substances not absorbed by the cheeses during the greasing process are collected by the underlying fluid-tight metallic tank 1.

The detecting devices 14 for surveying the feeding of the machine and for commanding the stopping of the washing and/or of the greasing process may obviousely be placed on the conveying belt 13 and/or the take-off chute 7.

Said detecting devices e.g. photodetectors or either contact or pressure responsive devices, may be interdependent and stop the machine when the feeding is interrupted for a time longer than a predetermined time defined by the quality of the shapes of cheese i.e. a predetermined time which is function of the hardness shown by their crust.

In order to ensure said optimum, predetermined permanence time which has not to be exceeded, the feeding speed may also be adjusted accordingly and controlled to a suitable value by suitably controlling said feeding speed through suitable controlling means.

For the purpose said conveying belt 13 may be driven by a variable speed motor as well as said rotating boom 8 for which also a step by rotational speed is conceivable.

The monitoring at distance of the work by the machine and by the attending employees may be performed by means of devices emitting light or sound signals and which come into action upon failure in the feeding of the machine.

Alternatively the machine may be provided with a counter counting the member of processed shapes of cheese or monitoring the productivity of the machine e.g. the rate of processed shapes of cheese per hour of work or a number of processed shapes of cheese against the expenses for the necessary work.

The delivering of water for the washing process and/or of the greasing substances for the greasing process is commanded by electrovalves which interrupt the flow of said fluids when the machine stops.

Said electrovalves may be actuated by suitable actuating means not only into a full-open and a full-closed position, but they may be used to control the flow of both water and greasing substances as a function of the quality of the cheeses to be processed, of the hardness of their crust, of the degree of foulness to be washed out, of the degree of drying up of the crust of the cheeses before performing a greasing process etc.

The machine may be coupled with means for quickly drying the washed shapes of cheese.

With such added drying means it is possible to perform the greasing process immediately after the washing process is completed, by mounting said added drying means between two machines of the hereabove disclosed kind, the first one of which will then be used to perform only the washing and the second one only the greasing process.

**Claims**

1. Machine for performing a washing and/or a greasing process on the crust of shapes of cheese (F) which show an essentially cylindrical form while they are longitudinally moving through said machine which comprises an elongated body provided with an inlet chute (6) and a take-off chute (7), a conveying belt (13) for conveying said shapes of cheese until they reach said inlet chute, said elongated body comprising an longitudinally extending operative region, wherein means are provided for a washing and/or greasing process, said operative region having the general shape of a tunnel (15A), the free height of said tunnel being adjustably delimited in relationship with the diameter of said cylindrical shapes of chesse, said shapes of cheese, conveyed by said conveying belt, being introduced into said tunnel through said inlet chute and forming inside said tunnel a train of shapes of cheese, whereby each shape of cheese is contacting the next following, allowing thus said train of shapes located inside said operative region to move through it toward said take-off chute upon thrusts or impulsions which said train of shapes receives from the next following shapes of cheese delivered to said train of shapes by means to move said train of shapes through said operative region, said machine comprising sprinkling means, characterized in that said elongated body is hollow and comprises a fluid-tight metallic tank (1) and the operative region extends only longitudinally above said tank, said operative region having the general shape of a tunnel (15a) whereby a hood (15) constitutes the top-wall, two rotatable longitudinal brushes (3) constitute the sidewalls and a series of rotatable transversal brushes (2) constitute the bottom-wall of said tunnel, the free height of said tunnel being delimited by a metal plate (16) provided with a plurality of holes and extending longitudinally through the whole length of said tunnel, the positioning of said metal plate being adjustable in height in relationship with the diameter of said cylindrical shapes of cheese, two sets of sprinklers being provided independently from each other namely;

—a first plurality of sprinklers (10a) is provided from which water for the washing process is sprinkled, said sprinklers being supplied through electrovalves from a water supply;

—a second plurality of sprinkers (11a) being further provided being supplied through electrovalves with oil or analogous greasing substances for the greasing process, the movement only in longitudinal direction of said train of shapes of cheese inside said tunnel being induced upon thrusts or impulsions which each shape receives from the next following shape of cheese delivered to the train of shapes:

—either by said conveying belt (13) conveying said shapes of cheese until they reach said inlet chute (6);

—or by a rotatable boom (8) arranged near by the inlet chute, this said movement being controllable by suitable means like for instance variable speed motors.

2. Machine according to claim 1, characterized in that the washing and/or the greasing process on both the circular surfaces of each cylindrical cheese is performed by said rotatable longitudinal brushes (3) while said rotatable transversal brushes (2) perform said washing and/or greasing process on the cylindrical external surface of each shape of cheese, said rotatable longitudinal brushes (3) being further adjustable in position so as to embrace in their operative region the axis i.e. the centre $C_F$ of each cylindrical shape of cheese, said rotatable longitudinal brushes (3) rotating in opposite senses so as to pull downwards the water or the oil used.

3. Machine according to claim 1, characterized in that the rotatable transversal brushes (2) rotate all in the same sense, preferably clockwise and at such a rotational speed as to provide each shape of cheese to rotate around its own axis providing hence said cylindrical external surface of each shape of cheese to be fully and uniformly washed and/or greased by bringing each point of said cylindrical external surface in contact with said transversal brushes (2), said rotational speed of said transversal brushes (2) being further such as not to provoke said shapes of cheese to move longitudinally through said tunnel (15a).

4. Machine according to claim 1, characterized in that the longitudinal movement through said tunnel (15a) is uniquely provoked by said thrusts provided by the action of one piston as an alternative to said conveying belt (13), or to said rotatable boom (8).

5. Machine according to claim 1 and 2, characterized in that the greasing process is performed similarly to the washing process by supplying oil or analogous greasing substances from an oil-tank (11) to said second plurality of sprinklers (11a).

6. Machine according to all the preceding claims, characterized in that its feeding speed is variable and in that the feeding rate is controlled by controlling means placed either in operating relationship with the conveying belt (13) or on the take-off chute (7).

7. Machine according to all the preceding claims, characterized in that said controlling means comprises photodetectors, pressure or contact responsive devices and in that upon failure in the feeding flow, said controlling means shall stop the machine at preprogrammed times as a function of the hardness of the crust of said shapes of cheese under processing, said controlling means may further be connected to monitoring means which may be either sound or light emitting devices and which may be mounted individually or assembled on a control panel.

8. Machine according to all the preceding claims, characterized by the following operational parameters:

a) horizontal and/or vertical position of the shafts (2a, 3a) carrying respectively said transversal (2) and longitudinal (3) brushes;

b) vertical position of said metal plate (16);

c) angular speed of said brushes;

d) intensity of the thrusts supplied to said train of shapes of cheese present inside the machine;

e) frequency of said thrusts which is directly a function of the feeding speed, and

f) preprogrammed stopping times upon failure in the feeding of the machine.

9. Machine according to all the preceding claims, characterized in that the length of said longitudinal brushes (3) and the number of said transversal brushes (2), is predetermined as a function of the longitudinal speed of said shapes of cheese inside said tunnel (15a) so as to vary the operative capability of said machine.

## Patentansprüche

1. Maschine zur Reinigung bzw. Schmierung der Rinde meistens zylindrischer Käseformen (F), die sich quer durch die Maschine bewegen, bestehend aus:

einem mit Ein-(6) und Austrittsrutsche (7) versehenen Hohlkörper, einem Fließband (13) zur Beförderung der obenerwähnten Käseformen (F) bis an die obenerwähnte Rutsche (6), wobei der obengenannte Hohlkörper aus einem der Länge nach verlaufenden Arbeitsraum besteht, in dem sich alle Vorrichtungen zur Reinigung bzw. Schmierung befinden, und der die Form eines Tunnels (15a) hat, dessen freie Höhe sich auf den Durchmesser der zylindrischen Käseformen einstellen läßt, die, vom Fließband befördert, über die obengenannte Rutsche in den obengenannten Tunnel hineingleiten, wo sie eine Reihe Käseformen bilden, in der jede Käseform mit der folgenden in Berührung kommt, was die obengenannte Ruhe Käseformen durch den obengenannten Arbeitsraum in die obengenannte Austrittsrutsche gelangen läßt, und zwar durch das gegenseitige Vorstoßen und—schieben jeder Käseform an die folgende, wobei die obengenannte Maschine über Spritzdüsen verfügt, und der obenerwähnte Hohlkörper einen luftdichten Tank (1) besitzt, über dem der tunnelförmige (15a) Arbeitsraum sich der Länge nach erstreckt, in dem eine Schutzhaube (15) den Oberteil des Tunnels bedeckt, zwei longitudinale Drehbürsten (3) die Seitenwände überziehen, und eine Reihe Querdrehbürsten (2) dicht am Tunnelmundloch sitzen, dessen freie Höhe von einer mit Querbohrungen versehenen Metallplatte (16) bestimmt wird, die quer zur Längsrichtung des obengenannten Tunnels verläuft und sich auf den Durchmesser der obengenannten Käseformen einstellen läßt, wobei auch zwei Reihen voneinander abhängig arbeitende Düsen sitzen, und zwar:

—die erste Reihe Düsen (10a) dient zum Bespritzen des Waschwassers und wird durch Elektroventile von einem Wasserkasten gespeist;

—die zweite Reihe Düsen (11a) wird durch Elektroventile mit öl und sonstigen Schmiermitteln nach einem Schmierungsverfahren gespeist, und zwar durch das gegenseitige Vorstoßen und-—schieben jeder Käseform an die folgende, das die obengenannte Reihe Käseformen durch den Tunnel nur der Länge nach vorwärtsgehen läßt:

—entweder vom obengenannten Fließband (13), das die Käseformen bis zur Eintrittsrutsche (6) befördert;

—oder von einem an der Eintrittsrutsche sitzenden Dreharm (8), der von Motoren mit einstellbarer Gescwindigkeit gesteuert wird.

2. Maschine nach Patentanspruch 1, bei der die Reinigung bzw. Schmierung der beiden Kreisflächen jeder Käseform (F) von den obengenannten longitudinalen Drehbürsten (3) ausgeführt werden, die obengenannten transversalen Bürsten (2) dagegen Reinigung bzw. Schmierung der zylindrischen Oberflächen jeder Käseform ausführen und die obengenannten longitudinalen Bürsten (3) sich derart einstellen lassen, daß sie direkt an der Rotationsachse bzw. an dem Mittelpunkt (Cf) jeder Käseform arbeiten und in entgegengesetzter Richtung Waschwasser und Schmieröl herunterspülen.

3. Maschine nach Patentanspruch 1, bei der die sich in derselben Richtung—meistens Uhrzeigerrichtung—drehenden transversalen Bürsten (2) die Käseformen mit einer bestimmten Drehgeschwindigkeit um deren Achsen rotieren lassen, und somit die zylindrischen Oberflächen jeder Käseform gleichmäßig gereinigt bzw. geschmiert werden könne, wobei jeder Fleck an der obenerwähnten zylindrischen Oberfläche mit den obengenannten transversalen Bürsten (2) in Berührung kommt, die obengenannte Drehgeschwindigkeit der obenerwähnten transversalen Bürsten (2) die Käseformen in jeglicher longitudinalen Bewegung durch den Tunnel (15a) hindert.

4. Maschine nach Patentanspruch 1, bei der die longitudinale Bewegung durch den obengenannten Tunnel (15a) nicht vom Fließband (13) bzw. vom obenerwähnten Dreharm (8), sondern von einem Druckkolben gesteuert wird.

5. Machine nach Patentanspruch 1 und 2, bei der die Schmierung genauso wie die Reinigung abläuft, und die obengenannte zweite Reihe Düsen (11a) mit Öl und sonstigen Schmiermitteln von einem Ölbehälter (11) versorgt werden.

6. Maschine nach obenerwähntem Patentanspruch, bei der ihre Speisegeschwindigkeit sich abändern läßt, und ihr Speisetempo durch Kontrollgeräte reguliert wird, wobei diese derart installiert werden, daß sie entweder vom Fließband (13) oder an der Austrittsrutsche (7) gesteuert werden.

7. Maschine nach obenerwähntem Patentanspruch, bei der die obengenannten Kontrollgeräte bestehen: aus einem Fotodetektor und aus Druck—und Kontaktvorrichtungen, wobei beim Abbruch des Speisezustroms die obengenannten Kontrollgeräte durch eine auf den Härtegrad der Rinde der obenerwähnten Käseformen einzustellende Vorprogrammierung die Maschine stoppen, indem die obengenannten Kontrollgeräte mit akustischen bzw. Leuchtsignalen verbunden werden können, welche entweder einzeln oder an einer Schalttafel montiert sind.

8. Maschine nach obengenannten Patentanspruch, bei der die folgenden Betriebseigenschaften vorhanden sind:

a) senkrechte bzw. waagerechte Stellung der Antriebswellen (2a), (3a) sowie der jeweiligen transversalen (2) und longitudinale (3) Drehbürsten;

b) seckcechte Stellung der obengenannten Metallplatte (16);

c) Winkelgeschwindigkeit der obengenannten Drehbürsten;

d) Stärkegrad des Vorstoßens an die obengenannte Reihe Käseformen (F) in der Maschine;

e) Auf die Speisegeschwindigkeit einstellbares Stoßtempo, und

f) Beim Abbruch des Speisungszustroms der Maschine Vorprogrammierung der Sperrvorrichtungen.

9. Maschine nach obenerwähntem Patentanspruch, bei der die Länge der longitudinalen Bürsten (3), sowie die Anzahl der obenerwähnten transversalen Bürsten (2) auf die longitudinale Drehgeschwindigkeit der obengenannten Käseformen im obengenannten Tunnel (15a) einzustellen sind, damit die Geschwindigkeit der Maschine sich abändern läßt.

**Revendications**

1. Machine pour réaliser un processus de lavage et/ou graissage de la croute de formes de fromage (F) essentiellement cylindriques pendant qu'elles se déplacent longitudinalement à travers la machine en question qui comprend:
un corps creux pourvu d'une goulotte d'entrée (6) et de déchargement (7), une bande transporteuse (13) pour le transport des formes de fromage (F) jusqu'à la goulotte (6); ce corps creux allongé est constitué d'une zone opérationnelle qui s'étend longitudinalement, où sont installés des instruments pour procéder au lavage et/ou graissage; cette zone opérationnelle à la forme d'un tunnel (15a) et la hauteur libre de ce dernier est réglable par rapport au diamétre des formes de fromage cylindriques transportées par la bande transporteuse et introduites dans le tunnel à travers la goulotte; elles forment à l'intérieur de ce dernier un train de formes de fromage où chaque forme de fromage est au contact de la suivante, ce qui permet au train de formes disposées dans la zone opérationnelle de se déplacer vers la goulotte de sortie grace aux poussées ou entrechoquements se produisant entre le différentes formes de fromage; pour faire déplacer le train de formes à travers la zone opérationnelle, cette machine comprend des instruments pulvérisateurs et est caractérisée par le fait que le corps allongé est creux et comprend un réservoir étanche (1); la zone opérationnelle s'étend uniquement longitudinalement sur le réservbir et elle a la forme d'un tunnel (15a) dont le chapeau (15) constitue la partie supérieure, deux brosses tournantes longitudivales (3) et une série de brosses transversales (2) tournantes constituent le fond du tunnel; la hauteur libre de ce dernier est délimitée par une plaque métallique (16) munie de plusieurs trous et qui s'étend longitudinalement tout au long du tunnel; le positionnement de la plaque métallique est réglable en hauteur par rapport au diamètre des formes de fromage et deux séries de tuyères indépendantes les unes des autres et plus précisément:

—une première série de tuyères (10a) est prévue pour faire gicler l'eau de lavage et est alimenté à travers des électrovannes par un collecteur d'eau;

—une seconde série de tuyères (11a), alimentée, au moyen d'électrovannes, en huile ou en substances graisseuses du meme genre en vue d'un processus de graissage; le mouvement uniquement longitudinal du train de formés de fromages à l'intérieur du tunnel est provoqué uniquement par des chocs ou des poussées entre chacune des formes transportées et ce:

—aussi bien à travers la bande transporteuse (13) qui transporte les formes de fromage jusqu'à leur arrivée à la goulotte d'entrée (6) ou alors à travers un bras tournant (8) situé près de la goulotte d'entrée; ce mouvement est controlable à partir d'instruments adéquats comme par exemple des moteurs à vitesse variable.

2. Machine d'après revendication 1, caractérisée par le fait que le lavage et/ou le procédé de graissage sur les deux surfaces circulaires de chacune des formes de fromage (F) est effectué par les brosses tournantes longitudinales (3) tandis que les brosses transversales (2) effectuent le lavage et/ou le graissage de la surface cylindrique extérieure de chaque forme de fromage; ces brosses longitudinales (3) sont réglables de façon à comprendre l'axe dans leur zone opérationnelle, c'est-à-dire le centre (CF) de chaque forme de fromage; les brosses longitudinales (3) tournent en sens contraire de façon à pousser l'eau et l'huile usée ver le bas.

3. Machine dont il est question à la revendication 1, caractérisée par le fait que les brosses transversales (2) tournent toutes dans le meme sens, de préférence dans le sens des aiguilles d'une montre et à une vitesse de rotation telle qu'elle puisse causer le mouvement de chaque forme de fromage autour de son axe; cela permet le lavage complet et uniforme et/ou le graissage de la surface cylindrique de chacune d'entre elles du fait que toute le surface cylindrique extérieure se trouve au contact des brosses transversales (2); la vitesse de rotation de ces dernières est telle qu'elle n'entraine pas le mouvement longitudinal à travers le tunnel (15a).

4. Machine dont il est question à la revendication 1, caractérisée par le fait que le mouvement longitudinal à travers le tunnel (15a) est uniquement provoqué par la poussée causée par l'action d'un piston comme alternative à la bande transporteuse (13) ou au bras pivotant (8).

5. Machine d'après les revendications 1 et 2 caractérisée par le fait que le procédé de graissage est effectué comme celui de lavage en fournissant de l'huile ou autres substances graisseuses analogues à partir d'un réservoir d'huile (11), à la seconde série de tuyères (11a).

6. Machine d'après toutes les revendications précédentes caractérisée par le fait que sa vitesse d'alimentation est variable et que le rythme d'alimentation est contrôle par des instruments de controle placés de façon à etre actionnés par la bande transporteuse (13) ou sur la goulotte de sortie (7).

7. Machine d'après les revendications précédentes, caractérisée par le fait que les instruments de controle susmentionnés comprennent un photo-détecteur, des dispositifs aissant en fonction de la pression et du contact; de plus, en cas d'absence du flux d'alimentation, ces instruments de controle arretent la machine dans des temps préprogrammés en fonction de la dureté de la croute des formes de fromage soumises à ce processus; ces instruments de controle peuvent aussi etre reliés à des instruments de signalisation sonores ou lumineux qui peuvent etre montés individuellement ou assemblés dans un tableau de controle.

8. Machine d'après les revendications précédentes, caractérisée par le paramètres opérationnels suivants:

a) position horizontale et/ou verticale des arbres (2a), (3a) respectivement des brosses cylindriques transversales (2) et longitudinales (3);

b) position verticale de la plaque métallique susmentionnée (16);

c) vitesse angulairé des brosses;

d) intensité des chocs fournis au train de formes de fromage (F) présents à l'intérieur de la machine;

e) fréquence des poussées en fonction directe de la vitesse d'alimentation et

f) temps préprogrammé di blocage pour la non-alimentation de la machine.

9. Machine d'après les revendications précédentes, caractérisée par le fait que la longueur des brosses longitudinales (3) et le nombre de brosses transversales (2) est prédéterminé en fonction de la vitesse longitudinale des formes de fromage dans le tunnel (15a) de façon à varier la vitesse opérationnelle de la machine.

FIG.1

FIG.4

FIG.3

FIG.2

FIG.5

FIG. 6